(19)

Europäisches
Patentamt
European
Patent Office
Office européen
des brevets

(11) **EP 2 530 846 A1**

(12) **EUROPEAN PATENT APPLICATION**

(43) Date of publication:
**05.12.2012 Bulletin 2012/49**

(51) Int Cl.:
***H04B 7/02*** *(2006.01)*

(21) Application number: **11305672.5**

(22) Date of filing: **01.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Alcatel Lucent
75007 Paris (FR)**
• **INSTITUT NATIONAL DE LA RECHERCHE
EN INFORMATIQUE ET EN AUTOMATIQUE
(INRIA)
78153 Le Chesnay Cedex (FR)**

(72) Inventors:
• **Garcia, Virgile
69100 Villeurbanne (FR)**

• **Gorce, Jean-Marie
01600 Massieux (FR)**
• **Lebedev, Nicolai
69616 Villeurbanne Cedex (FR)**
• **Roullet, Laurent
c/o Alcatel-Lucent Bell Labs France
91620 Nozay (FR)**

(74) Representative: **Benezeth, Philippe J.L. M. et al
Feray Lenne Conseil
Le Centralis
63 Avenue du Général Leclerc
92340 Bourg La Reine (FR)**

Remarks:
Amended claims in accordance with Rule 137(2)
EPC.

(54) **Method for setting up a wireless communication and wireless communication system**

(57)     The method comprises the step of - selecting, amongst several base stations of a wireless network, from which base stations a mobile terminal receives signals, at least two sets of at least one base station, - for each set, determining a value of a communication rating from: at least one measured power of a signal received by the mobile terminal from a base station of the set, and at least one measured power of a signal received by the mobile terminal from a base station outside the set, - selecting one of the set, called final set, from the communication rating values according to a criterion, - setting up a coordinated multipoint wireless communication between the mobile terminal and the base station or base stations of the final set.

*Figure 2*

**Description**

FIELD OF THE INVENTION

The present invention relates to a method for setting up a wireless communication and to a wireless communication system.

BACKGROUND

Coordinated multiple point communication, or CoMP communication, is a very promising distributed technique that takes advantage of neighbor cell's base stations of a wireless network to perform a joint transmission/reception. The joint transmission reception therefore increases the quality of the signals received by mobile terminal and/or by the wireless network.

In particular, a coordinated multiple point communication is expected to improve throughput of mobile terminal located by the edge of a cell, where the signal to and/or from only one base station is usually weak.

Coordinated multiple point communication is expected to be part of next generation cellular networks standards such as LTE-A.

SUMMARY

It has been found that there is a need for an efficient way to select base stations for a coordinated multiple point communication.

Accordingly, it is proposed to select, amongst several base stations of a wireless network, from which base stations a mobile terminal receives signals, at least two sets of at least one base station. It is further proposed to determine, for each set, a value of a communication rating from: at least one measured power of a signal received by the mobile terminal from a base station of the set, and at least one measured power of a signal received by the mobile terminal from a base station outside the set. It is further proposed to select one of the set, called final set, from the communication rating values according to a criterion. It is further propose to set up a coordinated multipoint wireless communication between the mobile terminal and the base station or base stations of the final set.

The base stations outside a set are generally considered as interference sources. The proposed method therefore allows to take into account interferences sources formed by base stations outside a set. Because the communication rating is determined from not only at least one base station of the set, but also from at least one base station outside the set, which can form an interference source, it has been found that the final set that is obtained is efficient for the coordinated multipoint wireless communication communication.

Optionally, the value of the communication rating is determined from the powers of the signals from all the base stations of the set.

Optionally, the value of the communication rating is determined from the powers of the signals from all the base stations outside the set.

Optionally, for each set, the communication rating is determined according to a respective relation between the signal powers, and the relation is different for each set.

Optionally, the criterion depends on a parameter, and selecting the final set comprises selecting a value for the parameter.

Optionally, selecting the final set according to a criterion comprises selecting the criterion amongst at least two predetermined possible criteria.

Optionally, the communication rating is a goodput for the mobile terminal.

Optionally, the determination of a value of communication rating involves a signal to interference and noise ratio for the mobile terminal, and determining a value of the communication rating comprises setting the signal to interference and noise ratio to a target signal to interference and noise ratio.

Optionally, the determination of a value of communication rating involves a signal to interference and noise ratio for the mobile terminal, and determining a value of the communication rating comprises determining a maximum value of the communicating rating over possible signal to interference and noise ratios.

A device of a wireless communication system is further proposed. The device comprises a circuit for selecting, amongst several base stations of a wireless network of the wireless communication system, from which base stations a mobile terminal receives signals, at least two sets of at least one base station. The wireless communication system further comprises a circuit for determining, for each set, a value of a communication rating from: at least one measured power of a signal received by the mobile terminal from a base station of the set, and at least one measured power of a signal received by the mobile terminal from a base station outside the set. The wireless communication system further comprises a circuit for selecting one of the set, called final set, from the communication rating values according to a criterion. The wireless communication system further comprises a circuit for sending an information identifying the final set to a circuit for setting up a coordinated multipoint wireless communication between the mobile terminal and the base station or base stations of the final set.

Optionally, the device is the mobile terminal.

Optionally, the device is one of the base stations of the wireless network.

Optionally, the base station further comprises the circuit for setting up the coordinated multipoint wireless communication between the mobile terminal and the base station or base stations of the final set.

BRIEF DESCRIPTION OF THE FIGURES

Embodiments of the invention will now be described by way of example with reference to the following figures :

- figure 1 is a schematic representation of a first wireless communication system,
- figure 2 is diagram of the steps of a first method for setting up a wireless communication,
- figure 3 is a schematic representation of a second wireless communication system,
- figure 4 is a diagram of the steps of a second method for setting up a wireless communication.

DESCRIPTION OF EMBODIMENTS

In the following description, the term "circuit" includes any hardware, or any software and hardware combination, for carrying out the function or functions of the circuit. In particular, the term "circuit" covers the case of a medium storing a computer program and a processing unit for executing the computer program, as well as the case of a dedicated electrical or electronic circuitry.

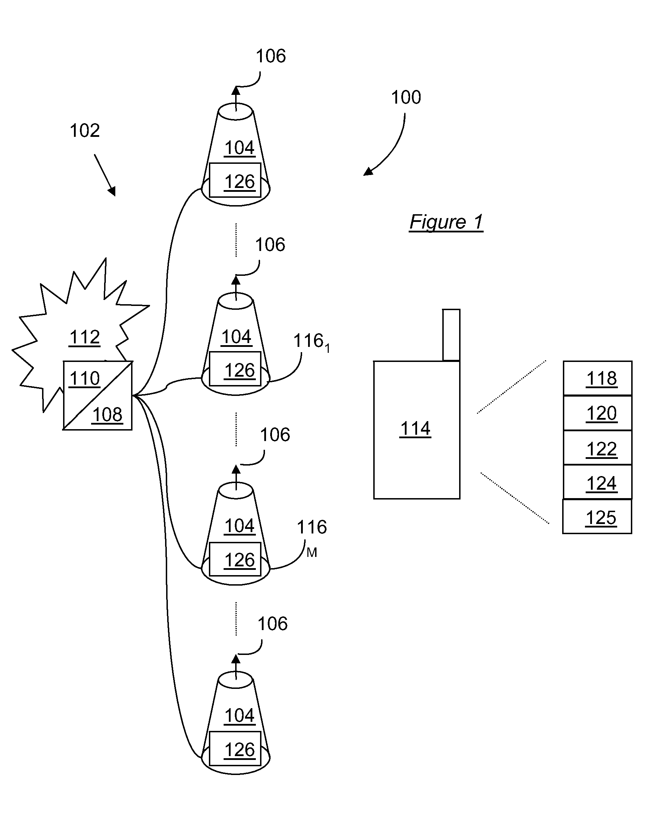

With reference to figure 1, a wireless communication system 100 comprises the following elements.

The wireless communication system 100 comprises a wireless communication network 102.

In the described example, the wireless communication network 102 supports the Long Term Evolution - Advanced standard.

The wireless communication network 102 comprises base stations 104. Each one of the base stations 104 comprises a circuit 106 for sending a signal to mobile terminals.

The wireless communication network 102 further comprises a Mobility Management Entity 108, also called MME.

The MME hosts for example one or several of the following functions: non-access stratum (NAS) signaling and NAS signaling security, access stratum security control, idle state mobility handling, EPS bearer control.

The wireless communication network 102 further comprises a Serving Gateway 110, also called S-GW, with an internet network 112 such that the Internet.

The S-GW provides for example one or several of the following functions: mobility anchor point for inter eNB handovers, termination of user-plane packets for paging reasons, switching of user plane for mobile terminal mobility.

In the described example, the base stations 104 are e-nodes B, also called eNBs. The eNBs hosts for example one or several of the following fonctions: radio ressource management, IP header compression and encryption, selection of MME at mobile terminal attachment, routing of user plane data towards S-GW, scheduling and transmission of paging messages and broadcasr information, measurement and measurement reporting configuration for mobility and scheduling, scheduling and transmission of ETWS messages.

The wireless communication system 100 further comprises a mobile terminal 114, also called User Equipment or UE. The mobile terminal 114 comprises a circuit 108 for receiving the signal from at least two of the base stations 104. The base stations from which the mobile terminal 114 receives signals are referenced $116_1...116_M$.

The wireless communication system 100 further comprises a circuit 118 for selecting, amongst the base stations $116_1...116_M$, at least two sets of at least one base station.

In the described example, the mobile terminal 114 comprises circuit 118.

The wireless communication system 100 further comprises a circuit 120 for determining, for each set, a value of a communication rating from at least one measured power of a signal received by the mobile terminal 114 from a base station of the set, and at least one measured power of a signal received by the mobile terminal 114 from a base station outside the set.

In the described example, the mobile terminal 114 comprises circuit 120.

The wireless communication system 100 further comprises a circuit 122 for selecting a criterion on the communication ratings between at least two criteria. However, in other examples, there could be only one criterion available so that circuit 114 would not be present.

In the described example, the mobile terminal 114 comprises circuit 122.

The wireless communication system 100 further comprises a circuit 124 for selecting one of the set, called final set, from the communication rating values according to the criterion.

In the described example, the mobile terminal 114 comprises circuit 124.

The wireless communication system 100 further comprises a circuit 125 for sending an information identifying the final set to a circuit 126 of the wireless network 102, which will be described below.

In the described example, the mobile terminal 114 comprises circuit 125. Circuit 125 is for example arranged for sending the final set is for example sent trough wireless communication.

The wireless communication system 100 further comprises a circuit 126 for setting up a coordinated multipoint wireless communication between the mobile terminal 114 and the base station or base stations of the final set.

In the described embodiment, the wireless communication network 102 comprises circuit 126, for instance in each base station 104.

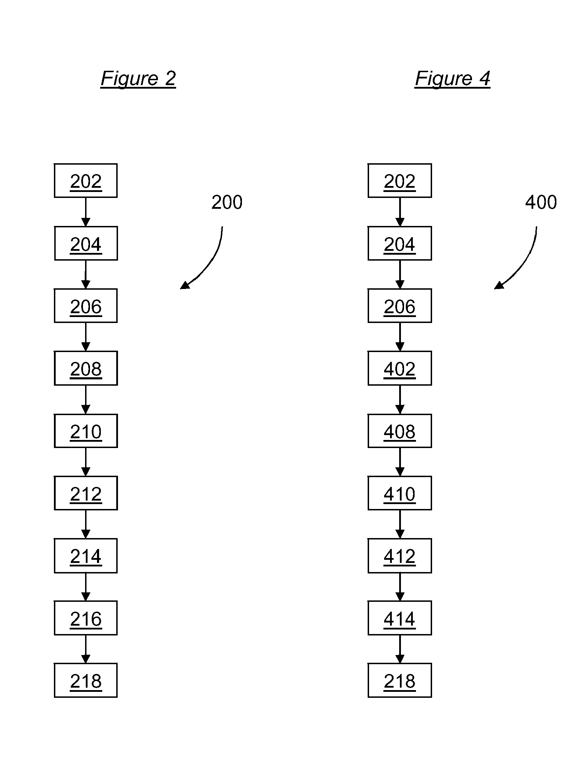

With reference to figure 2, a method 200 for setting up a wireless communication comprises the following steps. Method 200 can for example be applied in the wireless communication system 100 of figure 1.

During a step 202, a number $M$, higher than or equal to two, of base stations of a wireless network send signals to a mobile terminal. In the present description, the base stations are called $BS_1...BS_M$, while one of the base stations is called $BS_N$ with $1 \leq N \leq M$.

For example, the wireless network, the base stations and the mobile terminal are, respectively, the wireless network 102, the base stations $116_1...116_M$ and the mobile terminal 114 of figure 1.

During a step 204, the mobile terminal receives the signals from the M base stations.

During a step 206, the mobile terminal measures powers of the received signals from the base stations $BS_1...BS_M$. In the present description, the powers are called $P_1...P_M$, while one of the powers is called $P_N$ with $1 \leq N \leq M$. In the described example, the measured powers are $P_1...P_M$ are mean powers over a certain period of time. In an other example, the measured powers $P_1...P_M$ could be instantaneous powers.

In the described example, the powers $P_1...P_M$ are classified from the highest to the lowest, so that: $P_1 > P_2 > ... > P_M$. Furthermore, the same index is used for a base station $BS_N$ and the power $P_N$ of the signal sent by the base station $BS_N$, such that power $P_1$ corresponds to base station $BS_1$, power $P_2$ corresponds to base station $BS_2$, and so forth.

During a step 208, the mobile terminal selects, amongst the base stations $BS_1...BS_M$, at least two sets of at least one base station.

In the described example, the mobile terminal selects a number of sets equal to the number M of base stations $BS_1...BS_M$. In the present description, the sets are called $S_1...S_M$, while one of the sets is called $S_N$ with $1 < N < M$.

In the described example, the sets $S_1...S_M$ comprise an increasing number of base stations, starting from one base station for the first set $S_1$ until M base stations for the last set $S_M$. In the described example, the index N therefore also corresponds to the number of base stations in the set $S_N$.

In the described example, each set $S_N$ comprises at least the primary base station. The primary base station is for example responsible for sending control channels. For example, the primary base station is defined in 3GPP 36.814 Section 8.1.1.

In the described example, for each set $S_N$, the powers of the signals from the base stations of the set $S_N$ are the highest with respect to the powers of the signals from the base stations outside the set $S_N$. Therefore, in the described example, the first set $S_1$ comprises the base station $BS_1$ sending the signal which is received by the mobile terminal with the highest measured power $P_1$, the second set $S_2$ comprises the two base stations $BS_1$, $BS_2$ sending the two signals which are received by the mobile terminal with the two highest measured powers $P_1$, $P_2$, and so forth.

During a step 210, the mobile terminal determines, for each set $S_N$, a value of a communication rating. In the present description, the communication rating is called G. The communication rating G is determined from at least one measured power of a signal received by the mobile terminal from a base station of the set $S_N$, and from at least one measured power of a signal received by the mobile terminal from a base station outside the set $S_N$.

In the described example, the communication rating G is a goodput for the mobile terminal. A first definition of a goodput is the amount of useful information data delivered by the wireless network to the mobile terminal, per unit of time. The amount of data considered excludes, in particular, protocol overhead bits as well as retransmitted data packets. A second definition may include the overhead bits, but not retransmission.

In the described example, the goodput for the set $S_N$ is determined by the expression:

$$G = \left( \log_2 \left( 1 + \gamma \right) \right) \left( 1 - P \left( \gamma, S_n \right) \right)$$

where $\gamma$ is a signal over interference and noise ratio and $P$ is an outage probability, i.e. a probability that some information does not reach the mobile terminal.

In the previous relation, $log_2(1+\gamma)$ is the theoretical capacity (data debit) and $1-P(\gamma,S_n)$ is the probability for a good reception of data.

In the described example, the outage probability *P* is determined by the expression:

$$P = 1 -$$

$$\sum_{n \in \{N\}} \left( e^{\frac{-\gamma \sigma_z^2}{P_n}} \prod_{j \in \{N\}, j \neq n} \frac{P_n}{P_n - P_j} \prod_{k \notin \{N\}} \frac{P_n}{P_k \gamma + P_n} \right)$$

where *{N}* is the set of indexes of the base stations $BS_1...BS_N$ of the set $S_N$, i.e. *{N} = 1...N*, and $\sigma_z$ is the standard deviation of the thermal noise.

It will be appreciated that, in the described example, the communication rating G is determined from the powers of the signals of all the base stations of the set, and from the powers of the signals of all the base stations outside the set.

Furthermore, it will be appreciated that, in the described example, for each set $S_N$, the communication rating G is determined according to a respective relation between the signal powers $P_1...P_M$, and that the relation is different for each set $S_N$. For instance, the relation for the outage probability *P* for the first set $S_1 = \{BS_1\}$ is:

$$P = 1 - \left( e^{\frac{-\gamma \sigma_z^2}{P_1}} \prod_{k > 1} \frac{P_1}{P_k \gamma + P_1} \right)$$

while the relation for the outage probability *P* for the second set $S_2 = \{BS_1, BS_2\}$ is:

$$P = 1 - \left( e^{\frac{-\gamma \sigma_z^2}{P_1}} \frac{P_1}{P_1 - P_2} \prod_{k > 2} \frac{P_1}{P_k \gamma + P_1} \right) +$$

$$\cdot \left( e^{\frac{-\gamma \sigma_z^2}{P_2}} \frac{P_2}{P_2 - P_1} \prod_{k > 2} \frac{P_2}{P_k \gamma + P_2} \right)$$

From the previous expressions, it will further be appreciated that the determination of the goodput *G* involves the signal over interference and noise ratio $\gamma$, which is usually unknown (the signal over interference and noise ratio $\gamma$ depends on the considered set $S_N$ and its analytical expression cannot be easily calculated).

Therefore, in a first variant, step 210 comprises the following steps for each set $S_N$. The signal over interference and noise ratio $\gamma$ is set to a predetermined target $\gamma^*$. Then, the estimation of the goodput $G$ is determined from the target $\gamma^*$ and the powers $P_1...P_M$.

In a second variant, step 210 comprises the following step for each set $S_N$. The result of step 210 is the goodput $G$ maximized over the possible values of the signal over interference and noise ratio $\gamma$, with the given powers $P_1...P_M$.

In the described example, during a step 212, a criterion $C$ on the communication ratings $G(S_1)...G(S_M)$ is selected between at least two criteria. However, in other examples, there could be only one criterium available so that step 212 would be omitted.

In the described example, the selection is made according to one or several Key Performance Indicators, also called KPI. Examples of KPI are : debit (bits/s), spectral efficiency (bits/s/Hz), energy efficiency (bits/s/W), quality of service (outage, delay...).

In the described example, the two following criteria are available.

The first criterion $C$ is: the final set $S$ is the set with the greatest communication rating G over the number of base stations in the set, i.e. the final set $S$ verifies:

$$\frac{G(S)}{card(S)} = \max_{S_N} \frac{G(S_N)}{card(S_N)}$$

where *card (X)* is the number of base stations in the set *X*.

The second criterion $C$ is: the final set $S$ is the set comprising the lowest number of base stations amongst the sets whose communication rating $G$ is greater than a threshold symbolized $G_{threshold}$, i.e. the final set $S$ verifies:

$$G(S) > G_{threshold}$$

and

$$card\, S = \min_{S_N | G(S_N) > G_{threshold}} (card\, S_N)$$

It will be appreciated that, in the second variant, the criterion $C$ depends on the parameter $G_{threshold}$. The parameter $G_{threshold}$ is for example determined according to the debit request from the mobile terminal, which in turn depends on the application the mobile terminal is executing or try to execute. For example, the mobile terminal may need a 128 kbps debit for a video stream.

During a step 214, the mobile terminal selects one of the sets $S_1...S_M$ according to the selected criterion $C$ applied on the respective communication ratings $G(S_1)...G(S_M)$. In the present description, the selected set is called final set and called S.

During a step 216, the mobile terminal indicates the final set $S$ to the wireless network.

In the described example, the mobile terminal indicates the final set $S$ to the primary base station.

During a step 218, the wireless network sets up a coordinated multipoint wireless communication between the mobile terminal the base stations of the final set S.

The previous examples and relations were given for a downlink communication (from the wireless network to the mobile terminal). However, in other embodiments, the communication could be an uplink communication (from the mobile terminal to the wireless network).

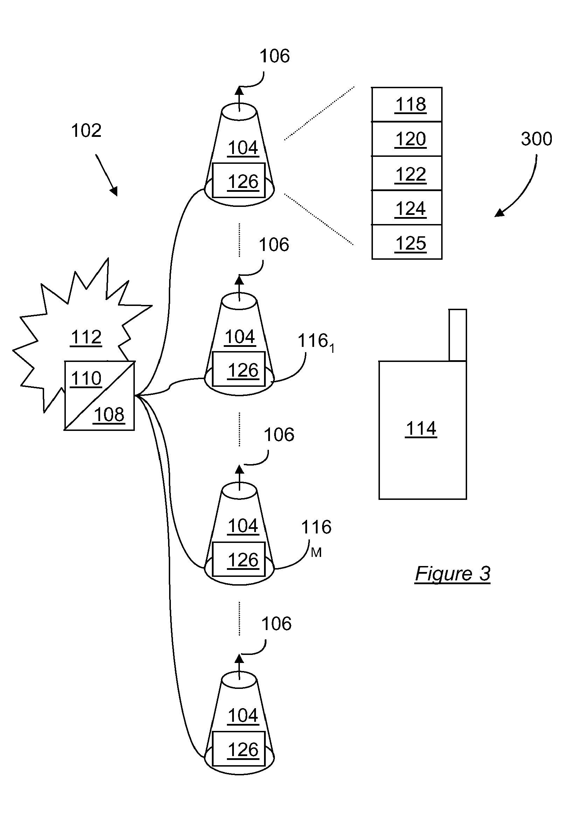

With reference to figure 3, a wireless communication system 300 comprises the same elements than the ones of the wireless communication system 100 of figure 1, except that each base station 104 comprises circuits 118, 120, 122, 124 and 125. For clarity reasons, circuits 118, 120, 122, 124 and 125 are only illustrated for one base station 104 on figure 3. For example, circuit 125 is arranged to send the information identifying the final set trough a wire communication.

With reference to figure 4, a method 400 for setting up a wireless communication comprises the following steps.

The method 400 comprises the same steps 202, 204 and 206 than the method 200 of figure 2, which are recalled below.

During a step 202, a number $M$, higher than or equal to two, of base stations of a wireless network send signals to a mobile terminal. In the present description, the base stations are called $BS_1...BS_M$, while one of the base stations is called $BS_N$ with $1 \leq N \leq M$.

For example, the wireless network, the base stations and the mobile terminal are, respectively, the wireless network 102, the base stations $116_1...116_M$ and the mobile terminal 114 of figure 3.

During a step 204, the mobile terminal receives the signals from the $M$ base stations.

During a step 206, the mobile terminal measures powers of the received signals from the base stations $BS_1...BS_M$. In the present description, the powers are called $P_1...P_M$, while one of the powers is called $P_N$ with $1 \leq N \leq M$.

Then, during a step 402, the mobile terminal sends the measured powers $P_1...P_M$ to the wireless network which receives them.

In the described example, the mobile terminal sends the measured powers $P_1...P_M$ to the primary base station which receives them.

In a first variant, steps 206 and 406 are carried out at time intervals, for example at a regular basis.

In a second variant, steps 206 and 406 are carried out when the communication is detected as unsatisfactory according to a communication criterion. For example, the communication criterion is a signal to interference and noise ratio, a goodput or an outage, or any combination of the them. The communication criterion can also be a detection of a signal from a base station different from the primary base station, the signal being stronger (higher power) than the signal from the primary base station. For example, the communication criterion is unsatisfactory when under a predetermined threshold. For example, the detection is carried out by the mobile terminal.

In a third variant, steps 206 and 406 are carried out during a handover procedure, during which, for example, the mobile terminal sends a request, also called event, to its primary base station in order to get a new primary base station. The procedure is for example initiated by the mobile terminal according to the signal to interference and noise ratio, e.g. when below a certain threshold. During the handover procedure, the mobile terminal can for example send the power measurements of the other base stations. Advantageously, the powers $P_1...P_M$ are the ones used in the handover procedure, which reduces the number of measurements.

The method 400 further comprises steps 408, 410, 412 and 414, which are identical to respectfully steps 208, 210, 212 and 214 of figure 2, except that they are carried out by the wireless network, for example by the primary base station, instead of the mobile terminal. These steps are briefly recalled below.

During a step 408, the wireless network selects, amongst the base stations $BS_1...BS_M$, at least two sets of at least one base station.

During a step 410, the wireless network determines, for each set $S_N$, a value of a communication rating $G$.

In the described example, during a step 412, a criterion $C$ on the communication ratings $G(S_1)...G(S_M)$ is selected by the wireless network between at least two criteria. However, in other examples, there could be only one criterion available so that step 412 would be omitted.

During a step 414, the wireless network selects one of the sets $S_1...S_M$ according to the selected criterion $C$ applied on the respective communication ratings $G(S_1)...G(S_M)$. In the present description, the selected set is called final set and called $S$.

The method 400 further comprises the step 218 of figure 2, which is recalled below.

During a step 218, the wireless network sets up a coordinated multipoint wireless communication between the mobile terminal the base stations of the final set $S$.

The present invention is not limited to the embodiments previously described, but instead defined by the appended claims. It will in fact be apparent to the one skilled in the art that modifications can be applied to the embodiments previously described.

In particular, the communication rating and/or the criterion for selecting the final set could be determined from look-up tables or other pre-calculated data instead of formulas. Furthermore, the coordinated multipoint wireless communication is not limited to a particular technique, for instance that could be defined in a norm, but encompass any joint transmission from or to several base stations to or from a mobile terminal.

Furthermore, the terms used in the appended claims shall not be understood as limited to the elements of the embodiments previously described, but on the contrary shall be understood as including all equivalent elements that the one skilled in the art is able to derive using their general knowledge.

**Claims**

1. Method for setting up a wireless communication, comprising :

   - selecting (208; 408), amongst several base stations of a wireless network, from which base stations a mobile terminal receives signals, at least two sets of at least one base station,
   - for each set, determining (210; 410) a value of a communication rating from:

      -- at least one measured power of a signal received by the mobile terminal from a base station of the set,
      -- at least one measured power of a signal received by the mobile terminal from a base station outside the set,

   - selecting (214; 414) one of the set, called final set, from the communication rating values according to a criterion,
   - setting (218) up a coordinated multipoint wireless communication between the mobile terminal and the base station or base stations of the final set.

2. Method according to claim 1, wherein the value of the communication rating is determined from the powers of the signals from all the base stations of the set.

3. Method according to claim 1 or 2, wherein the value of the communication rating is determined from the powers of the signals from all the base stations outside the set.

4. Method according to any one of claims 1 to 3, wherein:

   - for each set, the communication rating is determined according to a respective relation between the signal powers,
   - the relation is different for each set.

5. Method according any one of claims 1 to 4, wherein:

   - the criterion depends- selecting (214; 414) the final set comprises selecting a value for the on a parameter, parameter.

6. Method according to any one of claims 1 to 5, wherein selecting (214; 414) the final set according to a criterion comprises selecting the criterion amongst at least two predetermined possible criteria.

7. Method according to any one of claims 1 to 6, wherein the communication rating is a goodput for the mobile terminal.

8. Method according to any one of claims 1 to 7, wherein:

   - the determination of a value of communication rating involves a signal to interference and noise ratio for the mobile terminal,
   - determining a value of the communication rating comprises setting the signal to interference and noise ratio to a target signal to interference and noise ratio.

9. Method according to any one of claims 1 to 7, wherein:

   - the determination of a value of communication rating involves a signal to interference and noise ratio for the mobile terminal,
   - determining a value of the communication rating comprises determining a maximum value of the communicating rating over possible signal to interference and noise ratios.

10. Device of a wireless communication system comprising:

    - a circuit (118) for selecting, amongst several base stations ($116_1...116_M$) of a wireless network (102) of the wireless communication system, from which base stations a mobile terminal (114) receives signals, at least two sets of at least one base station,
    - a circuit (120) for determining, for each set, a value of a communication rating from:

-- at least one measured power of a signal received by the mobile terminal (114) from a base station of the set,
-- at least one measured power of a signal received by the mobile terminal (114) from a base station outside the set,

- a circuit (124) for selecting one of the set, called final set, from the communication rating values according to a criterion,
- a circuit (125) for sending an information identifying the final set to a circuit (126) for setting up a coordinated multipoint wireless communication between the mobile terminal (114) and the base station or base stations of the final set.

**11.** Device according to claim 10, wherein the device is the mobile terminal (114).

**12.** Device according to claim 11, wherein the device ($116_1...116_M$) is one of the base stations of the wireless network (102).

**13.** Device according to claim 11, wherein the base station ($1161...116M$) further comprises the circuit (126) for setting up the coordinated multipoint wireless communication between the mobile terminal (114) and the base station or base stations of the final set.

**Amended claims in accordance with Rule 137(2) EPC.**

**1.** Method for setting up a wireless communication, comprising :

- selecting (214; 414), amongst several base stations of a wireless network, from which base stations a mobile terminal receives signals, a set of base stations, called final set,
- setting (218) up a coordinated multipoint wireless communication between the mobile terminal and the base stations of the final set,

the method being **characterized by**:

- selecting (208; 408), amongst the several base stations, at least two sets of base stations,
- for each set, determining (210; 410) a value of a communication rating from:

  - - at least one measured power of a signal received by the mobile terminal from a base station of the set,
  - - at least one measured power of a signal received by the mobile terminal from a base station outside the set,

and by the fact that selecting (214; 414) the final set comprises selecting (214; 414) one of the sets as the final set, from the communication rating values according to a criterion.

**2.** Method according to claim 1, wherein the value of the communication rating is determined from the powers of the signals from all the base stations of the set.

**3.** Method according to claim 1 or 2, wherein the value of the communication rating is determined from the powers of the signals from all the base stations outside the set.

**4.** Method according to any one of claims 1 to 3, wherein:

- for each set, the communication rating is determined according to a respective relation between the signal powers,
- the relation is different for each set.

**5.** Method according any one of claims 1 to 4, wherein:

- the criterion depends on a parameter,
- selecting (214; 414) the final set comprises selecting a value for the parameter.

**6.** Method according to any one of claims 1 to 5, wherein selecting (214; 414) the final set according to a criterion comprises selecting the criterion amongst at least two predetermined possible criteria.

**7.** Method according to any one of claims 1 to 6, wherein the communication rating is a goodput for the mobile terminal.

**8.** Method according to any one of claims 1 to 7, wherein:

- the determination of a value of communication rating involves a signal to interference and noise ratio for the mobile terminal,
- determining a value of the communication rating comprises setting the signal to interference and noise ratio to a target signal to interference and noise ratio.

**9.** Method according to any one of claims 1 to 7, wherein:

- the determination of a value of communication rating involves a signal to interference and noise ratio for the mobile terminal,
- determining a value of the communication rating comprises determining a maximum value of the communicating rating over possible signal to interference and noise ratios.

**10.** Method according to any one of claims 1 to 9, wherein:

- determining (210; 410) a value of a communication rating is carried out by the wireless network,

and further comprising:

- the mobile terminal sends (402) the measured powers ($P_1...P_M$) to the wireless network which receives them.

**11.** Device of a wireless communication system comprising:

- a circuit (118) for selecting, amongst several base stations ($116_1...116_M$) of a wireless network (102) of the wireless communication system, from which base stations a mobile terminal (114) receives signals, at least two sets of base stations,
- a circuit (120) for determining, for each set, a value of a communication rating from:

  - - at least one measured power of a signal received by the mobile terminal (114) from a base station of the set,
  - - at least one measured power of a signal received by the mobile terminal (114) from a base station outside the set,

- a circuit (124) for selecting one of the set, called final set, from the communication rating values according to a criterion,
- a circuit (125) for sending an information identifying the final set to a circuit (126) for setting up a coordinated multipoint wireless communication between the mobile terminal (114) and the base stations of the final set.

**12.** Device according to claim 11, wherein the device is the mobile terminal (114).

**13.** Device according to claim 11, wherein the device ($116_1...116_M$) is one of the base stations of the wireless network (102).

**14.** Device according to claim 13, wherein the base station ($116_1...116_M$) further comprises the circuit (126) for setting up the coordinated multipoint wireless communication between the mobile terminal (114) and the base stations of the final set.

*Figure 1*

*Figure 3*

<u>*Figure 2*</u>

<u>*Figure 4*</u>

200

400

Europäisches
Patentamt

European
Patent Office

Office européen
des brevets

# EUROPEAN SEARCH REPORT

**Application Number**

EP 11 30 5672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/080879 A1 (GRANT STEPHEN [US]) 7 April 2011 (2011-04-07) * abstract * * paragraph [0006] - paragraph [0009] * * paragraph [0021] - paragraph [0024] * * paragraph [0029] * * paragraph [0036] - paragraph [0037] * * paragraph [0041] * ----- | 1-13 | INV. H04B7/02 |
| X | WO 2010/025286 A2 (QUALCOMM INC [US]; GOROKHOV ALEXEI Y [US]; MALLIK SIDDHARTHA [US]; BHU) 4 March 2010 (2010-03-04) * abstract * * paragraph [0008] * * paragraph [0044] - paragraph [0046] * * paragraph [0059] - paragraph [0063] * ----- | 1-13 | |

TECHNICAL FIELDS
SEARCHED      (IPC)

H04B

The present search report has been drawn up for all claims

| Place of search | Date of completion of the search | Examiner |
|---|---|---|
| The Hague | 27 September 2011 | Lustrini, Donato |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 11 30 5672

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2011

| Patent document cited in search report | | Publication date | Patent family member(s) | | Publication date |
|---|---|---|---|---|---|
| US 2011080879 | A1 | 07-04-2011 | WO | 2011042864 A2 | 14-04-2011 |
| WO 2010025286 | A2 | 04-03-2010 | CA | 2733582 A1 | 04-03-2010 |
| | | | CN | 102132597 A | 20-07-2011 |
| | | | EP | 2329604 A2 | 08-06-2011 |
| | | | US | 2010056215 A1 | 04-03-2010 |

EPO FORM P0459

For more details about this annex : see Official Journal of the European Patent Office, No. 12/82